# EUROPÄISCHE PATENTSCHRIFT

(11) **EP 1 360 891 B1**
(45) Veröffentlichungstag und Bekanntmachung des Hinweises auf die Patenterteilung: **03.06.2009**
(21) Anmeldenummer: 03101193.5
(22) Anmeldetag: 30.04.2003
(51) Int. Cl.: A01F 29/10

(54) **Vorrichtung zur Einstellung der Schnittlänge einer Häckseleinrichtung**
Device for adjusting the cut length of a chopping device
Dispositif pour ajuster la longueur de coupe d'une hacheuse

(30) Priorität: 10.05.2002 DE 10220699
(43) Veröffentlichungstag der Anmeldung: 12.11.2003
(73) Patentinhaber: DEERE & COMPANY, Moline, Illinois 61265-8098 (US)
(72) Erfinder: Pirro, Peter, 66917 Wallhalben (DE)
(74) Vertreter: Holst, Sönke

(56) Entgegenhaltungen:
- EP-A- 0 843 959
- EP-A- 1 053 671
- EP-A- 1 166 619
- DE-A- 10 021 663
- DE-A- 19 812 500

## Beschreibung

Die Erfindung betrifft eine Vorrichtung zur Einstellung der Schnittlänge einer Häckseleinrichtung mit einem Feuchtigkeitssensor, der eingerichtet ist, die Feuchtigkeit des Häckselguts zu erfassen, einer Speichereinrichtung und einer mit dem Feuchtigkeitssensor und der Speichereinrichtung verbundenen Steuereinrichtung, wobei in der Speichereinrichtung eine Information über die Schnittlänge in Abhängigkeit von der Feuchtigkeit abgelegt ist und mit der Steuereinrichtung die Schnittlänge der Häckseleinrichtung in Abhängigkeit von der mit dem Feuchtigkeitssensor erfassten Feuchtigkeit des Häckselguts selbsttätig einstellbar ist.

Landwirtschaftlich eingesetzte Feldhäcksler dienen zum Aufnehmen und Häckseln von Erntegut, beispielsweise Gras oder Mais, das in der Regel als Viehfutter verwendet wird. Für die gute Verdaubarkeit des Futters ist die Schnittlänge des Häckselguts entscheidend. Bei aktuellen Feldhäckslern sind daher Mittel zur Einstellung der Schnittlänge der Häckseleinrichtung vorgesehen, wobei in Stufen schaltbare Getriebe oder stufenlos einstellbare Hydraulikmotoren verwendet werden.

In der DE 100 21 663 A wird eine Vorrichtung eingangs genannter Art beschrieben. Ein Feldhäcksler ist mit hydraulisch angetriebenen Vorpresswalzen ausgestattet, deren Geschwindigkeit über einen Feuchtigkeitssensor und einen Rechner einer Steuerelektronik selbsttätig abhängig vom Feuchtegrad des Ernteguts angepasst wird. Hier wird demnach nur die Feuchtigkeit des Ernteguts berücksichtigt.

In der EP 1 053 671 A wird eine Erntemaschine mit einer optisch arbeitenden Messeinrichtung zur Messung von Inhaltsstoffen und anderen Eigenschaften von Erntegut beschrieben. Die Messeinrichtung dient in erster Linie zur georeferenzierten Kartierung der Messergebnisse der Messeinrichtung; das Messergebnis kann auch in nicht näher spezifizierter Weise zur Steuerung von Prozessparametern dienen.

Das der Erfindung zugrunde liegende Problem wird darin gesehen, den Bediener eines Feldhäckslers bei der Schnittlängeneinstellung zu entlasten.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Feuchtigkeit des Häckselguts wird mittels eines Feuchtigkeitssensors erfasst und die Schnittlänge anhand der erfassten Feuchtigkeit eingestellt. Die Schnittlänge wird durch eine geeignete (separate oder in die bereits vorhandene Bordelektronik integrierte) Steuereinrichtung selbsttätig auf einen aus dem Messwert des Sensors abgeleiteten Wert eingestellt. Die Steuereinrichtung ist mit dem Feuchtigkeitssensor verbunden und steuert die Schnittlänge entsprechend seines Messwerts. Die Steuereinrichtung ist mit einer Speichereinrichtung verbunden, in der eine Information über die Schnittlänge bzw. die Drehzahl der Häckseltrommel und/oder der Vorpresswalzen in Abhängigkeit von den Messwerten des Sensors z. B. in Form einer Tabelle, Datenbank oder mathematischen Kurven oder Funktionen abgelegt ist. Diese Informationen können aus Fütterungsversuchen oder anderen Quellen stammen. Die Steuereinrichtung ist zusätzlich zum Feuchtigkeitssensor mit einem anderen Sensor verbunden, der einen anderen Parameter des Häckselguts erfasst, und sie ist betreibbar, aus der Speichereinrichtung einen Schnittlängenwert zu entnehmen, der am Besten zu der gemessenen Kombination aus der mit dem Feuchtigkeitssensor gemessenen Feuchtigkeit und dem mit dem anderen Sensor gemessenen Parameter passt.

Auf diese Weise erreicht man, dass unabhängig von den Eigenschaften des Häckselguts eine optimale Verdaubarkeit erreicht wird. Dadurch wird eine optimale Ausnutzung des Nährwerts des Ernteguts beim Verfüttern an Tiere erzielt.

Als Feuchtigkeitssensor kommt insbesondere ein Mikrowellensensor, ein kapazitiver Sensor oder ein Leitwertsensor in Frage. Allerdings können auch beliebige andere zur Feuchtigkeitsmessung geeigneten Typen von Sensoren Verwendung finden. Ist das Häckselguts relativ feucht und daher leichter verdaubar, wird zweckmäßigerweise eine größere Schnittlänge eingestellt als bei trockenem Häckselgut.

Zusätzlich zur Feuchtigkeit kann beispielsweise der Nährstoffgehalt des Gutes gemessen werden, der mittels eines entsprechenden Sensors erfassbar ist (s. US 5 991 025 A). Auch kann der Körneranteil optisch gemessen werden. Auch andere Inhaltsstoffe des Häckselguts können erfasst werden.

Die Schnittlänge kann durch Änderung der Drehzahl einer Häckseltrommel und/oder durch Variation der Geschwindigkeit, mit der ihr das Häckselgut zugeführt wird, eingestellt werden. In der Regel wird die zweite Variante verwendet, bei der die Drehzahl von Vorpresswalzen mittels eines Elektro- oder Hydraulikmotors variiert wird. Dabei kann ein Teil der Antriebsleistung der Vorpresswalzen mechanisch bereitgestellt werden. Es wäre aber auch grundsätzlich möglich, die Drehzahl der Häckseltrommel zu variieren, was durch eine Drehzahleinstellung des Antriebsmotors erfolgen kann.

In den Zeichnungen ist ein nachfolgend näher beschriebenes Ausführungsbeispiel der Erfindung dargestellt. Es zeigt:
- Fig. 1: eine Erntemaschine in Seitenansicht und in schematischer Darstellung; und
- Fig. 2: eine schematische Darstellung der Einrichtung zur selbsttätigen Schnittlängeneinstellung.

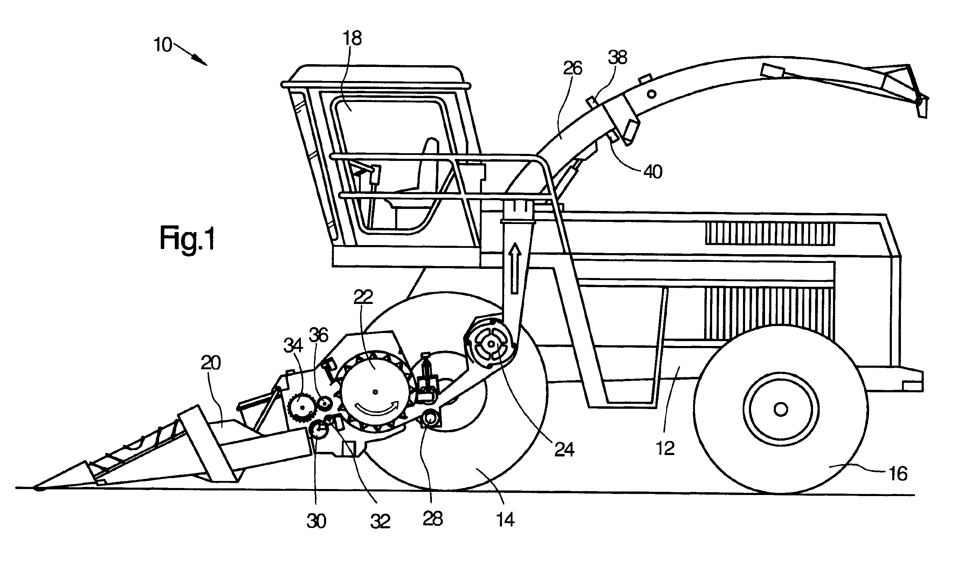

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen, wird durch vier Vorpresswalzen 30, 32, 34, 36 einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über einen drehbaren Austragsschacht 26. Zwischen der Häckseltrommel 22 und der Fördervorrichtung 24 ist eine Nachzerkleinerungsvorrichtung mit zwei zusammenwirkenden Walzen 28 angeordnet, durch die das geförderte Gut der Fördervorrichtung 24 tangential zugeführt wird.

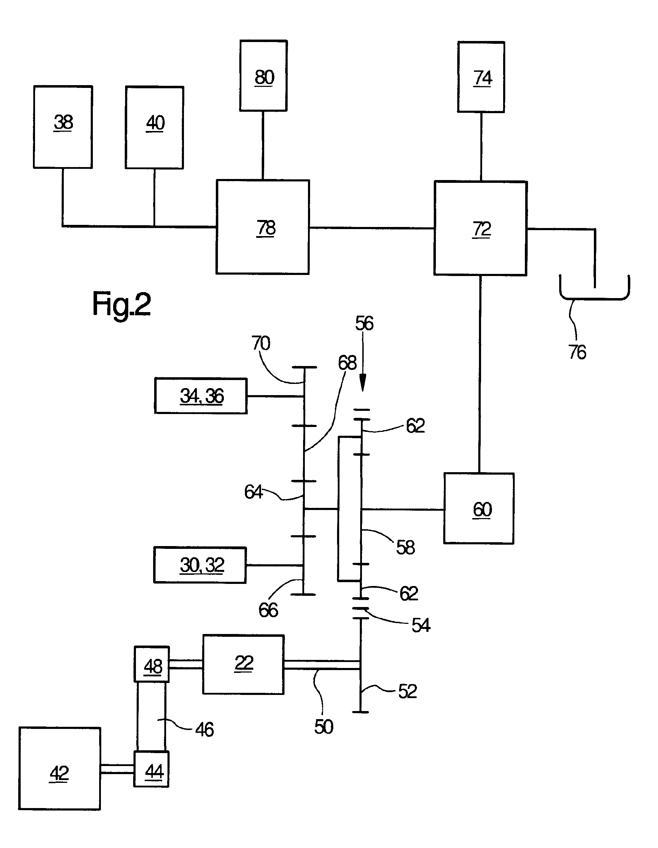

Gemäß der vorliegenden Erfindung ist eine Vorrichtung zur selbsttätigen Schnittlängeneinstellung vorgesehen, die den Fahrer von der Aufgabe entlastet, die Schnittlänge auf den Wert einzustellen, bei dem das Häckselgut sich am Besten zum Verfüttern an Tiere eignet. Die Schnittlänge des gehäckselten Guts, das durch den Austragschacht 26 ausgeworfen wird, hängt von der Umfangsgeschwindigkeit der Vorpresswalzen 30 - 36, von der Drehzahl der Häckseltrommel 22 und der (in der Regel fest vorgegebenen) Anzahl der an ihr befestigten Messer ab. In der Figur 2 ist der Antrieb der Häckseltrommel 22 und der Vorpresswalzen 30 - 36 und die Vorrichtung zur selbsttätigen Schnittlängeneinstellung detailliert dargestellt.

Ein beim Erntebetrieb mit konstanter Drehzahl drehender Verbrennungsmotor 42 treibt über eine Riemenscheibe 44, die eine abschaltbare Kupplung enthält, einen Treibriemen 46 an, der wiederum eine mit der Häckseltrommel 22 gekoppelte Riemenscheibe 48 antreibt. Die durchgehende Welle 50 der Häckseltrommel 22 treibt ein Zahnrad 52 an, das mit einem Ringrad 54 eines Planetengetriebes 56 kämmt. Das Sonnenrad 58 des Planetengetriebes 56 ist mit einem Hydraulikmotor 60 gekoppelt. Die Planetenräder 62 des Planetengetriebes 56 treiben ein Zahnrad 64 an, das über weitere Zahnräder 66, 68 und 70 die unteren Vorpresswalzen 30, 32 und dazu gegensinnig die oberen Vorpresswalzen 34, 36 antreibt. Durch diese Anordnung wird die Häckseltrommel 22 mit konstanter Drehzahl angetrieben. Die Drehzahl der Vorpresswalzen 30 - 36 hängt von der Drehzahl und Drehrichtung des Hydraulikmotors 60 ab.

Der Hydraulikmotor 60 ist durch eine Ventileinrichtung 72 mit einer Quelle 74 unter Druck stehenden Hydraulikfluids und einem Tank 76 zur Aufnahme des Hydraulikfluids verbunden. Die Ventileinrichtung 72 ist elektrisch mit einer Steuereinrichtung 78 verbunden, die betreibbar ist, die Ventileinrichtung 72 derart anzusteuern, dass der Hydraulikmotor 60 mit einer von der Steuereinrichtung 78 vorgegebenen Drehzahl und Drehrichtung rotiert. Die Steuereinrichtung 78 ist somit zur stufenlosen Einstellung der Schnittlänge des ausgeworfenen Guts eingerichtet.

Die Vorrichtung zur selbsttätigen Schnittlängeneinstellung umfasst weiterhin einen Sensor zur Messung von Guteigenschaften, in der dargestellten Ausführungsform einen Feuchtigkeitssensor, der aus einem Mikrowellensender 40 und einem Mikrowellenempfänger 38 aufgebaut ist. Der Feuchtigkeitssensor arbeitet in Transmission, d. h. das Gut wird durchstrahlt, und ist im Austragsschacht 26 angeordnet. Nähere Einzelheiten des Aufbaus und der Funktion eines derartigen Feuchtigkeitssensors sind in der DE 196 48 126 A offenbart, deren Lehre durch Verweis in die vorliegende Offenbarung mit aufgenommen wird. Die Steuereinrichtung 78 ist mit dem Mikrowellensender 40 und dem Mikrowellenempfänger 38 verbunden. Anhand der Signale des Mikrowellenempfähgers 38 evaluiert die Steuereinrichtung 78 den Feuchtigkeitsgehalt des Häckselguts. Sie entnimmt aus einer Speichereinrichtung 80 einen dem gemessenen Feuchtigkeitsgehalt entsprechenden Wert für eine optimale Schnittlänge und steuert die Ventileinrichtung 72 dementsprechend an. Die Werte für die Schnittlängen können aus Versuchen oder Expertenwissen stammen. Generell wird die Schnittlänge um so länger sein, je feuchter das Gut ist. Die Speichereinrichtung 80 enthält eine Tabelle oder Datenbank, in der die Schnittlänge (bzw. die Drehzahl des Hydraulikmotors 60) in Abhängigkeit von der Feuchtigkeit des Ernteguts abgespeichert ist. Eventuelle Zwischenwerte können durch Interpolation errechnet werden. Es ist auch eine Verwendung von Algorithmen (mathematischen Funktionen) denkbar. Somit wird auch bei Änderungen der Feuchtigkeit des Ernteguts während des Erntevorgangs ohne Verzögerung und ohne manuelles Eingreifen des Bedieners stets eine optimale Schnittlänge erzielt.

Anzumerken ist, dass verschiedene Modifikationen der Erfindung denkbar sind. So wäre es denkbar, anstelle des Mikrowellensensors 38, 40 (oder zusätzlich dazu) einen beliebigen anderen Feuchtigkeitssensor zu verwenden, z. B. einen kapazitiven Sensor, einen optischen Sensor oder einen Leitfähigkeitssensor. Der Sensor kann auch an einer Stelle der Erntemaschine 10 zwischen der Häckseltrommel 22 und dem Drehkranz des Austragsschachts 26 oder stromauf der Häckseltrommel 22 angeordnet sein.

Es werden zusätzlich beliebige andere Sensoren verwendet, die andere Parameter des Ernteguts erfassen und deren Signale zur Schnittlängeneinstellung herangezogen werden. So könnte mittels eines im nahen Infrarotbereich arbeitenden Sensors der Proteingehalt des Häckselguts gemessen werden. Anhand des gemessenen Werts des Parameters und in der Speichereinrichtung 80 abgelegter Informationen wird wiederum die Schnittlänge eingestellt. Da mehrere Sensoren verwendet werden, die unterschiedliche Parameter des Häckselguts erfassen, wird die Steuereinrichtung 78 aus der Speichereinrichtung 80 einen Schnittlängenwert entnehmen, der am Besten zu der gemessenen Parameterkombination passt.

In Sonderfällen kann die selbsttätige Einstellung der Schnittlänge durch einen Bediener in der Kabine 18 ausgeschaltet und durch eine manuelle Einstellung ersetzt werden.

## Patentansprüche

1. Vorrichtung zur Einstellung der Schnittlänge einer Häckseleinrichtung (22), mit:
einem Feuchtigkeitssensor, der eingerichtet ist, die Feuchtigkeit des Häckselguts zu erfassen,
einer Speichereinrichtung (80)
und einer mit dem Feuchtigkeitssensor und der Speichereinrichtung (80) verbundenen Steuereinrichtung (78),
wobei in der Speichereinrichtung (80) eine Information über die Schnittlänge in Abhängigkeit von der Feuchtigkeit abgelegt ist
und mit der Steuereinrichtung (78) die Schnittlänge der Häckseleinrichtung (22) in Abhängigkeit von der mit dem Feuchtigkeitssensor erfassten Feuchtigkeit des Häckselguts selbsttätig einstellbar ist,
**dadurch gekennzeichnet, dass** die Steuereinrichtung (78) zusätzlich zum Feuchtigkeitssensor mit einem anderen Sensor verbunden ist, der einen anderen Parameter des Häckselguts erfasst, und dass die Steuereinrichtung (78) betreibbar ist, aus der Speichereinrichtung (80) einen Schnittlängenwert zu entnehmen, der am Besten zu der gemessenen Kombination aus der mit dem Feuchtigkeitssensor gemessenen Feuchtigkeit und dem mit dem anderen Sensor gemessenen Parameter passt.

2. Vorrichtung nach Anspruch 1, **dadurch gekennzeichnet, dass** der Feuchtigkeitssensor ein Mikrowellensensor (38, 40) und/oder ein kapazitiver Sensor und/oder ein Leitfähigkeitssensor ist.

3. Vorrichtung nach Anspruch 1 oder 2, **dadurch gekennzeichnet, dass** der andere Sensor ein optischer Sensor ist.

4. Vorrichtung nach einem der Ansprüche 1 bis 3, **dadurch gekennzeichnet, dass** die Schnittlänge bei relativ hoher Feuchte des Häckselguts größer ist als bei niedrigerer Feuchte.

5. Vorrichtung nach einem der vorhergehenden Ansprüche, **dadurch gekennzeichnet, dass** der andere Sensor eingerichtet ist, Inhaltsstoffe des Häckselguts zu erfassen.

6. Vorrichtung nach einem der Ansprüche 1 bis 5, **dadurch gekennzeichnet, dass** die Schnittlänge durch Vorgabe der Drehzahl eines Elektro- oder Hydraulikmotors (60) einstellbar ist, der die Drehzahl von Vorpresswalzen (30 - 36) der Häckseleinrichtung definiert.

7. Häckseleinrichtung mit einer Vorrichtung nach einem der Ansprüche 1 bis 6.

8. Erntemaschine (10), insbesondere Feldhäcksler, mit einer Häckseleinrichtung nach Anspruch 7.

## Claims

1. Device for adjusting the length cut by a chopping device (22), with:
a moisture sensor which is set up to detect the moisture of the material to be chopped,
a memory device (80),
and a control device (78) connected to the moisture sensor and the memory device (80),
wherein information about the length cut is stored in the memory device (80) as a function of the moisture,
and the control device (78) can be used to automatically adjust the length cut by the chopping device (22) as a function of the moisture, which is detected by the moisture sensor, of the material to be chopped,
**characterized in that** the control device (78), in addition to being connected to the moisture sensor, is connected to another sensor which detects another parameter of the material to be chopped, and **in that** the control device (78) can be operated so as to gather from the memory device (80) a cutting length value which best matches the measured combination of the moisture measured by the moisture sensor and the parameter measured by the other sensor.

2. Device according to Claim 1, **characterized in that** the moisture sensor is a microwave sensor (38, 40) and/or a capacitive sensor and/or a conductivity sensor.

3. Device according to Claim 1 or 2, **characterized in that** the other sensor is an optical sensor.

4. Device according to one of Claims 1 to 3, **characterized in that** a greater length is cut if the material to be chopped is relatively moist than if it is less moist.

5. Device according to one of the preceding claims, **characterized in that** the other sensor is set up to detect the content of the material to be chopped.

6. Device according to one of Claims 1 to 5, **characterized in that** the length cut can be adjusted by stipulation of the rotational speed of an electric or hydraulic motor (60) which defines the rotational speed of initial compression rollers (30-36) of the chopping device.

7. Chopping device with a device according to one of Claims 1 to 6.

8. Harvesting machine (10), in particular field chopper, with a chopping device according to Claim 7.

## Revendications

1. Dispositif pour ajuster la longueur de coupe d'une hacheuse (22), comprenant :
un capteur d'humidité qui est prévu pour détecter l'humidité du produit à hacher,
un dispositif de stockage (80)
et un dispositif de commande (78) connecté au capteur d'humidité et au dispositif de stockage (80),
une information relative à la longueur de coupe en fonction de l'humidité étant saisie dans le dispositif de stockage (80)
et le dispositif de commande (78) permettant d'ajuster automatiquement la longueur de coupe de la hacheuse (22) en fonction de l'humidité du produit à hacher détectée par le capteur d'humidité,
**caractérisé en ce que** le dispositif de commande (78) est connecté à un autre capteur en plus du capteur d'humidité, lequel détecte un autre paramètre de la hacheuse, et **en ce que** le dispositif de commande (78) peut être utilisé pour prélever du dispositif de stockage (80) une valeur de longueur de coupe qui s'adapte au mieux à la combinaison mesurée de l'humidité mesurée avec le capteur d'humidité et du paramètre mesuré avec l'autre capteur.

2. Dispositif selon la revendication 1, **caractérisé en ce que** le capteur d'humidité est un capteur à micro-ondes (38, 40) et/ou un capteur capacitif et/ou un capteur à conductibilité.

3. Dispositif selon la revendication 1 ou 2, **caractérisé en ce que** l'autre capteur est un capteur optique.

4. Dispositif selon l'une quelconque des revendications 1 à 3, **caractérisé en ce que** la longueur de coupe est plus longue pour une relativement grande humidité du produit à hacher que pour une plus faible humidité.

5. Dispositif selon l'une quelconque des revendications précédentes, **caractérisé en ce que** l'autre capteur est prévu pour détecter le contenu du produit à hacher.

6. Dispositif selon l'une quelconque des revendications 1 à 5, **caractérisé en ce que** la longueur de coupe peut être ajustée en établissant au préalable la vitesse de rotation d'un moteur électrique ou hydraulique (60) qui définit la vitesse de rotation de rouleaux de pré-pressage (30 - 36) de la hacheuse.

7. Hacheuse comprenant un dispositif selon l'une quelconque des revendications 1 à 6.

8. Moissonneuse (10), en particulier faucheuse-hacheuse, comprenant une hacheuse selon la revendication 7.
